# FASCICULE DE BREVET EUROPEEN

(11) **EP 3 112 222 B1**
(45) Date de publication et mention de la délivrance du brevet: **09.01.2019**
(21) Numéro de dépôt: 16176429.5
(22) Date de dépôt: 27.06.2016
(51) Int. Cl.: B60S 1/38

(54) **EMBOUT D'EXTRÉMITÉ PRÉVU POUR ÊTRE MONTÉ SUR UN SUPPORT FLEXIBLE ET BALAI D'ESSUYAGE COMPRENANT L'EMBOUT D'EXTRÉMITÉ ET LE SUPPORT FLEXIBLE**
ENDSTÜCK ZUM MONTIEREN AUF EINE FLEXIBLE HALTERUNG, UND SCHEIBENWISCHER, DER EIN SOLCHES ENDSTÜCK UND EINE SOLCHE FLEXIBLE HALTERUNG UMFASST
END FITTING PROVIDED IN ORDER TO BE MOUNTED ON A FLEXIBLE SUPPORT AND WIPER BLADE COMPRISING THE END FITTING AND THE FLEXIBLE SUPPORT

(30) Priorité: 29.06.2015 FR 1556029
(43) Date de publication de la demande: 04.01.2017
(73) Titulaire: Valeo Systèmes d'Essuyage, 78322 Le Mesnil Saint Denis (FR)
(72) Inventeur: GAUCHER, Vincent, 63720 ENNEZAT (FR); HOUSSAT, Stéphane, 63112 BLANZAT (FR); JOMARD, Olivier, 63170 AUBIERE (FR); POTON, Eric, 63430 Pont du Château (FR)
(74) Mandataire: Vincent, Catherine Marie Marguerite

(56) Documents cités:
- WO-A1-2015/069925
- US-A1- 2014 259 506

## Description

Le domaine de la présente invention est celui des balais d'essuyage destinés à équiper un véhicule automobile. L'invention concerne plus particulièrement un embout d'extrémité prévu pour être monté sur un support flexible, l'embout d'extrémité et le support flexible étant constitutifs d'un balai d'essuyage. L'invention vise également ledit balai d'essuyage et un système d'essuyage incorporant un tel balai d'essuyage. L'invention porte aussi sur un procédé d'assemblage du balai d'essuyage.

Un véhicule automobile est couramment équipé d'un système d'essuyage pour assurer un balayage et un lavage d'un pare-brise constitutif du véhicule automobile afin d'éviter que la vision, qu'a un conducteur du véhicule automobile, de son environnement ne soit perturbée. Le système d'essuyage est classiquement entraîné par un bras effectuant un mouvement de va-et-vient angulaire en vis-à-vis du pare-brise et à l'intérieur d'un champ de vision du conducteur. Le système d'essuyage comporte au moins un balai d'essuyage allongé, porteur lui-même d'une lame de frottement réalisée en une matière flexible. La lame de frottement racle contre le pare-brise et évacue l'eau en l'amenant en dehors du champ de vision du conducteur. Le balai d'essuyage est réalisé sous la forme, soit, dans une version classique, d'un palonnier articulé qui tient la lame de frottement en plusieurs endroits discrets, soit, dans une version plus récente couramment dénommée en anglais "flat blade" (pour "lame plate"), d'un ensemble semi-rigide qui maintient la lame racleuse sur toute sa longueur. Dans cette seconde solution, l'ensemble semi-rigide est rattaché à un bras que comprend le système d'essuyage par un ensemble constitué d'un connecteur mécanique et d'un adaptateur. Le connecteur mécanique est une pièce qui est sertie directement sur le balai d'essuyage, alors que l'adaptateur est une pièce intermédiaire qui permet la fixation du connecteur sur le bras du système d'essuyage.

Le document WO 2015/069925 A1 décrit le préambule de la revendication 1.

Le document FR 2964618 propose un système d'essuyage du deuxième type dont l'ensemble semi-rigide comprend un support flexible et un embout d'extrémité qui sont solidarisés par l'intermédiaire d'un moyen de verrouillage que comporte l'embout d'extrémité.

Le support flexible comprend un déflecteur d'air qui est conformé pour transformer une pression exercée par un flux d'air s'écoulant le long du pare-brise en une force d'appui de la lame racleuse contre ce dernier. Le déflecteur comprend notamment une arête généralement convexe pour faciliter un écoulement du flux d'air.

Le support flexible comprend également deux canaux de canalisation d'un liquide, tel qu'un liquide de lavage du pare-brise qui sont ménagés de part et d'autre d'une zone de maintien de la lame racleuse.

Le support flexible est choisi parmi une gamme de supports flexibles qui sont de dimensions variées, de conformations différentes tant en ce qui concerne leur hauteur que leur largeur ainsi que pour ce qui est de leur symétrie. Il en résulte une nécessité de disposer d'une gamme d'embouts d'extrémité qui est aussi vaste que la gamme de supports flexibles de manière à ce que l'adaptation de l'embout d'extrémité sur le support flexible soit possible. Il découle de l'utilisation d'un balai d'essuyage selon le document FR2964618 des coûts de fabrication, de référencement, de stockage qui sont importants et qu'il est souhaitable de réduire.

Par ailleurs, il est souhaitable de disposer d'un balai d'essuyage qui soit indémontable dans le sens où une désolidarisation de l'embout d'extrémité et du support flexible par un utilisateur mal intentionné entraîne une destruction soit de l'embout d'extrémité, soit du support flexible, soit des deux. Il en découle que le l'embout d'extrémité proposé par le document FR2964618 mérite d'être amélioré.

Un but de la présente invention est de résoudre les inconvénients décrits ci-dessus en proposant un embout d'extrémité robuste, agencé pour résister à des conditions d'utilisation sévères, et notamment un actionnement intempestif de l'embout d'extrémité, ce dernier étant de surcroît facile à réaliser. L'embout d'extrémité ainsi conçu augmente un niveau de sécurité et/ou de fiabilité de la fixation du moyen de verrouillage vis-à-vis du support flexible constitutif d'un balai d'essuyage de la présente invention, qui est apte à résister à une volonté de détérioration d'un utilisateur ou un passant indélicat.

Un autre but de la présente invention est de proposer un embout d'extrémité qui est compatible avec un support flexible susceptible de comporter une variété de déflecteurs d'air distincts, sans affecter une efficacité et/ou un aspect de l'embout d'extrémité.

Un embout d'extrémité de la présente invention est un embout d'extrémité pour un balai d'essuyage d'une vitre d'un véhicule automobile comprenant au moins un support flexible ainsi qu'une lame de frottement destinée à être appliquée contre la vitre. L'embout d'extrémité comprend un logement apte à recevoir une partie terminale du support flexible.

Selon la présente invention, l'embout d'extrémité comprend deux éléments distincts dont une coque externe et un fourreau interne qui est pourvu du logement.

En position d'utilisation du balai d'essuyage, la coque externe loge le fourreau interne.

L'embout d'extrémité est pourvu d'au moins un premier moyen de verrouillage du fourreau interne à l'intérieur de la coque externe.

Le premier moyen de verrouillage est notamment un moyen de verrouillage par emboîtement.

Le premier moyen de verrouillage comprend par exemple au moins un ergot et au moins une rainure apte à recevoir au moins partiellement l'ergot en position d'utilisation du balai d'essuyage.

De préférence, l'ergot équipe une première face interne de la coque externe et la rainure équipe une première face externe du fourreau interne.

Selon l'invention, le premier moyen de verrouillage comprend au moins deux butées antagonistes dont au moins une première butée équipant une deuxième face interne de la coque externe et au moins une deuxième butée équipant une deuxième face externe du fourreau interne.

La première butée et la deuxième butée s'étendent avantageusement à l'intérieur d'un plan transversal qui est orthogonal à un axe d'extension longitudinal de l'embout d'extrémité.

De préférence, la première face interne et la deuxième face interne de la coque externe délimitent partiellement une enceinte de réception du fourreau interne.

L'enceinte loge préférentiellement au moins une rampe de guidage du fourreau interne.

La rampe de guidage est par exemple portée par un renfort, la rampe de guidage étant ménagée selon un plan longitudinal.

Un balai d'essuyage de la présente invention comprend au moins un tel embout et ledit support flexible inséré à l'intérieur du logement.

Le balai d'essuyage comprend avantageusement au moins un deuxième moyen de verrouillage de la partie terminale du support flexible en position engagée à l'intérieur du logement.

Un système d'essuyage de la présente invention comprend un tel balai d'essuyage et un bras d'entraînement dudit balai d'essuyage.

Un procédé d'assemblage d'un tel balai d'essuyage est principalement reconnaissable en ce que le procédé d'assemblage comprend une première étape d'insertion du fourreau interne à l'intérieur de la coque externe à partir d'un déplacement en translation du fourreau interne et de la coque externe l'un par rapport à l'autre.

Le procédé d'assemblage comprend notamment une deuxième étape d'encastrement du fourreau interne entre la première face interne et la deuxième face interne de la coque externe, la deuxième étape d'encastrement comprenant également une étape d'de mise en place au moins partielle de l'ergot de la coque externe à l'intérieur de la rainure du fourreau interne.

Le procédé d'assemblage comprend notamment une troisième étape de verrouillage de l'embout d'extrémité sur le support flexible.

Ces dispositions sont telles que l'embout d'extrémité est avantageusement indémontable dans le sens où l'association de la coque externe et du fourreau interne est robuste et pérenne pour les dites conditions d'utilisation sévères mais courantes du balai d'essuyage, et qu'une telle association ne peut être rompue qu'à partir d'une destruction de l'embout d'extrémité.

Ces dispositions sont aussi telles que l'embout d'extrémité est constitué d'un fourreau interne standard et d'une coque externe choisie parmi une gamme de coques externes harmonisées avec des éléments du support flexible, tels que le déflecteur d'air ou le support flexible lui-même.

Selon d'autres caractéristiques avantageuses de l'invention prises seules ou en combinaison entre elles et/ou avec les caractéristiques ci-dessus :
- ladite coque externe est sensiblement harmonisée avec un moyen de connexion du balai d'essuyage à un bras d'entraînement dudit balai. On entend par « harmonisée » que la coque externe présente une continuité esthétique et/ou aérodynamique avec ledit moyen de connexion. Cette continuité esthétique et/ou aérodynamique n'exclut pas la présence d'un jour étroit entre la coque externe et le moyen de connexion.
- ladite coque externe s'étend sensiblement depuis une extrémité longitudinale du balai d'essuyage jusqu'à un moyen de connexion du balai à un bras d'entraînement du balai, ledit moyen de connexion étant attaché au support flexible du balai, sensiblement au centre, longitudinalement, du balai d'essuyage.
- ladite coque externe est articulée sur un moyen de connexion du balai à un bras d'entraînement du balai.
- ladite coque externe est un capot d'extrémité du balai d'essuyage, qui est de préférence un balai plat. La coque externe forme donc un carénage du balai propre à assurer une fonction de déflecteur d'air au-delà de la région du fourreau interne, le long d'une direction vers le centre longitudinal du balai.

D'autres caractéristiques, détails et avantages de l'invention ressortiront plus clairement à la lecture de la description donnée ci-après à titre indicatif en relation avec des dessins dans lesquels :
- la figure 1 est une vue générale en perspective d'un balai d'essuyage selon la présente invention, qui est prévu pour être monté sur un pare-brise d'un véhicule automobile,
- la figure 2 est une vue en perspective de côté d'une coque externe et d'un fourreau interne constitutifs d'un embout d'extrémité participant du balai d'essuyage illustré sur la figure 1, la figure 2 étant réalisée lors d'une phase préliminaire à une étape d'assemblage de la coque externe et du fourreau interne pour former l'embout d'extrémité,
- la figure 3 est une vue en perspective de dessous de la coque externe illustrée sur la figure 2,
- la figure 4 est une vue en perspective de dessous de l'embout d'extrémité illustré sur la figure 2, la figure 4 étant réalisée après l'étape d'assemblage de la coque externe et du fourreau interne pour former l'embout d'extrémité.

Il faut tout d'abord noter que les figures exposent la présente invention de manière détaillée pour mettre en oeuvre l'invention, lesdites figures pouvant bien entendu servir à mieux définir l'invention le cas échéant.

Sur les figures, la dénomination longitudinale se réfère à l'orientation d'un embout d'extrémité 1 ou d'un balai d'essuyage 2 selon l'invention. La direction longitudinale correspond à un axe longitudinal A1 d'extension générale du balai d'essuyage 2, alors qu'une orientation transversale correspond à une direction concourante, c'est-à-dire qui croise la direction longitudinale, en étant notamment perpendiculaire à l'axe longitudinal A1 d'extension générale du balai d'essuyage 2.

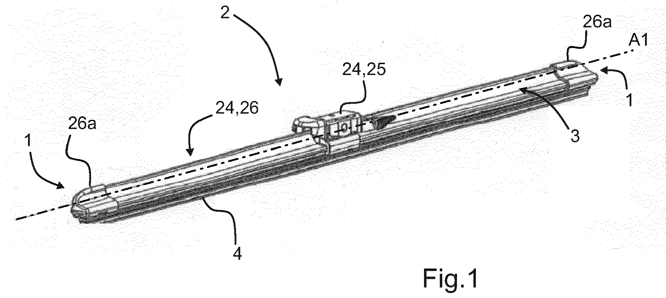

Sur la figure 1, le balai d'essuyage 2 de la présente l'invention est représenté en perspective. Un tel balai d'essuyage 2 est utilisé pour racler une vitre d'un véhicule automobile. Préférentiellement, la vitre est un pare-brise équipant un habitacle du véhicule automobile. Alternativement, la vitre est une lunette arrière du véhicule automobile. Dans ces cas-là, le balai d'essuyage 2 a pour fonction de déplacer hors d'un champ de vision d'un conducteur l'eau et/ou des salissures déposées sur le pare-brise. Selon un autre exemple, la vitre est par exemple une vitre d'un projecteur équipant le véhicule automobile. Dans ce cas-là, le balai d'essuyage 2 a pour fonction de déplacer hors d'un champ d'éclairage l'eau et/ou des salissures déposées sur la vitre.

Le balai d'essuyage 2 est constitué d'au moins un support flexible 3, un composant 24, une lame de frottement 4 et au moins un embout d'extrémité 1, voire et préférentiellement deux embouts d'extrémité 1 installés sur chaque partie terminale du support flexible 3.

Le support flexible 3 peut prendre la forme d'une unique bande métallique plate et flexible. Selon une alternative, le support flexible 3 peut être formé par deux bandes métalliques et flexibles logées chacune dans une encoche ménagée de part et d'autre de la lame de frottement 4. Dans les deux cas ci-dessus, à l'état de repos, une telle bande métallique est courbée selon un plan perpendiculaire à une direction longitudinale de la bande métallique. La fonction d'une telle bande métallique, qu'elle soit unique ou double, est de répartir les efforts d'appui le long de la lame de frottement 4 générés par un moyen de connexion 25 attaché au support flexible 3 au centre, longitudinalement, du balai d'essuyage 2.

Le composant 24 désigne plusieurs types de pièce constitutive du balai d'essuyage 2. Il peut s'agir du moyen de connexion 25 destiné à relier le balai d'essuyage 2 à un bras d'entraînement en rotation du balai d'essuyage 2. Il peut également s'agir d'un ou plusieurs déflecteurs d'air 26 rapportés sur le support flexible 3 et dont la fonction est de transformer un flux d'air passant sur le balai d'essuyage 2 en une force d'appui qui plaque la lame de frottement 4 contre la vitre.

L'embout d'extrémité 1 comprend une paroi supérieure 26a qui prolonge le déflecteur d'air 26. La paroi supérieure 26a est une paroi qui est visible depuis un point d'observation du véhicule automobile situé à l'avant de ce dernier.

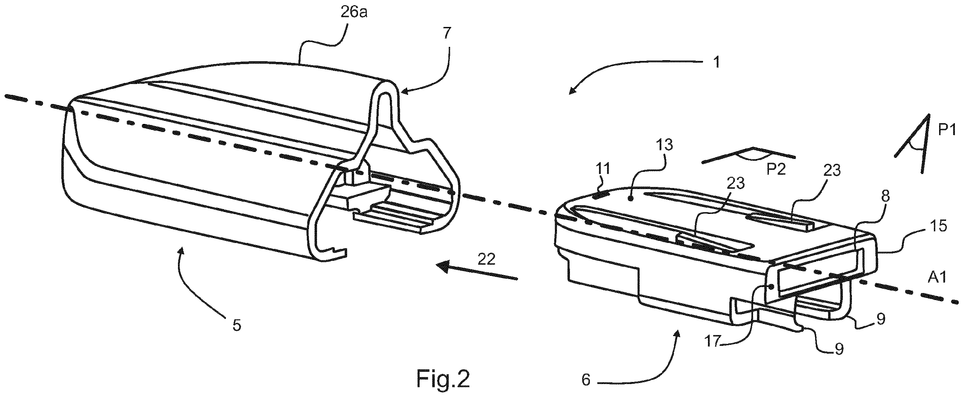

Sur la figure 2, l'embout d'extrémité 1 comprend deux éléments distincts 5,6 dont une coque externe 5 et un fourreau interne 6. Autrement dit, et à l'encontre des habitudes prises dans le domaine automobile, l'embout d'extrémité 1 est formé de deux éléments distincts 5,6 qui sont dissociés préalablement à une étape d'assemblage des éléments distincts 5,6 entre eux. Autrement dit encore, l'embout d'extrémité 1 ne forme pas un ensemble monobloc préalablement à ladite étape.

Selon une variante préférée, l'embout d'extrémité 1 est constitué en tout et pour tout de la coque externe 5 et du fourreau interne 6 qui sont assemblés pour former l'embout d'extrémité 1 en position d'utilisation du balai d'essuyage 2 illustrée sur la figure 2.

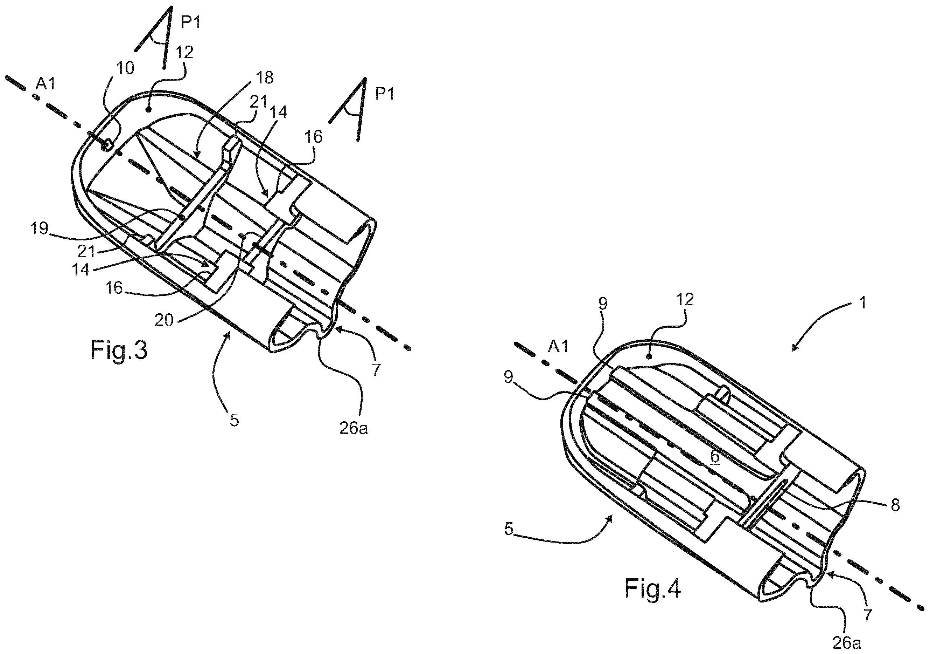

Dans une telle position, également représentée en figure 4, la coque externe 5 loge le fourreau interne 6. Autrement dit, la coque externe 5 forme une enveloppe du fourreau interne 6 qui est invisible à un observateur regardant l'embout d'extrémité 1 au-dessus de la paroi supérieure 26a, c'est-à-dire depuis un point d'observation courant du balai d'essuyage 2 en position d'utilisation sur le véhicule automobile. Autrement dit encore, la coque externe 5 forme un réceptacle pour recevoir le fourreau interne 6 et forme un masque au dit utilisateur.

La coque externe 5 est choisie parmi une gamme de coques externes 5 adaptées à des formes et dimensions variées du déflecteur d'air 26. A cet effet, la coque externe 5 comporte une arête 7 qui est adaptée à une conformation du déflecteur d'air 26, tant en ce qui concerne une hauteur, une largeur, voire une symétrie de ce dernier. L'arête 7 vient notamment en prolongement du déflecteur d'air 26. Ces dispositions sont telles que la coque externe 5 présente une fonction esthétique pour harmoniser une conformation du support flexible 3 équipé du déflecteur d'air 26 et rendre homogène une vision du balai d'essuyage 2 par ledit observateur.

Le fourreau interne 6 assure les fonctions d'assemblage entre l'embout d'extrémité 1 et le support flexible 3. Le support flexible 3 étant préférentiellement d'une conformation constante, le fourreau interne 6 est standardisé. Autrement dit, deux embouts d'extrémité 1 de la présente invention sont susceptibles d'être réalisés à partir de l'assemblage d'un même fourreau interne 6 identique de l'un à l'autre des embouts d'extrémité 1 et de coques externes 5 dissemblables de l'un à l'autre des embouts d'extrémité 1.

Plus particulièrement, le fourreau interne 6 comprend un logement 8 apte à recevoir la partie terminale du support flexible 3. Le logement 8 est conformé en une glissière à l'intérieur de laquelle l'extrémité terminale du support flexible 3 est apte à coulisser lors de l'étape d'assemblage de l'embout d'extrémité 1 sur le support flexible 3. Le logement 8 est étendu selon l'axe longitudinal A1 d'extension générale du balai d'essuyage 2 qui forme également un axe d'extension général du fourreau interne 6.

Plus particulièrement encore, le fourreau interne 6 comprend des pattes de maintien 9 d'une extrémité terminale de la lame de frottement 4, les pattes de maintien 9 étant au nombre de deux en étant ménagées parallèlement l'une à l'autre et parallèlement à l'axe longitudinal A1 d'extension générale du balai d'essuyage 2.

L'embout d'extrémité 1 est pourvu d'au moins un premier moyen de verrouillage 10,11,14,15 du fourreau interne 6 à l'intérieur de la coque externe 5. Le premier moyen de verrouillage 10,11,14,15 est indémontable dans le sens où une désolidarisation du fourreau interne 6 et de la coque externe 5 ne peut se faire qu'après une détérioration du fourreau interne 6 ou de la coque externe 5 ou des deux. Le premier moyen de verrouillage 10,11,14,15 est préférentiellement un moyen de verrouillage par emboîtement qui comprend au moins un ergot 10, visible sur la figure 3, et au moins une rainure 11, visible sur la figure 2, apte à recevoir l'ergot 10 en position d'utilisation du balai d'essuyage 2. Dans cette position, l'ergot 10 est logé au moins partiellement à l'intérieur de la rainure 11, de telle sorte que l'ergot 10 ne peut sortir de la rainure 11 qu'après un bris de l'ergot 10, un arrachement de la rainure 11 voire les deux. L'ergot 10 équipe une première face interne 12 de la coque externe 5 et la rainure 11 équipe une première face externe 13 du fourreau interne 6.

Le premier moyen de verrouillage 10,11,14,15 comprend au moins deux butées antagonistes 14,15 dont au moins une première butée 14 équipant une deuxième face interne 16 de la coque externe 5 et au moins une deuxième butée 15 équipant une deuxième face externe 17 du fourreau interne 6.

La première face interne 12 et la deuxième face interne 16 de la coque externe 5 sont avantageusement ménagées en vis-à-vis l'une de l'autre parallèlement à un plan transversal P1 qui est préférentiellement orthogonal à l'axe longitudinal A1 d'extension générale du balai d'essuyage 2.

La première face externe 13 et la deuxième face externe 17 sont notamment perpendiculaires l'une à l'autre, la deuxième face externe 17 étant ménagée parallèlement au plan transversal P1. Le plan transversal P1 est orthogonal à un plan longitudinal P2 qui comprend l'axe longitudinal A1 d'extension générale du balai d'essuyage 2.

En position d'assemblage de la coque externe 5 et du fourreau interne 6, la première butée 14 et la deuxième butée 15 sont en contact l'une avec l'autre, voire plaquée l'une contre l'autre en force pour assurer un emboîtement du fourreau interne 6 à l'intérieur de la coque externe 5. Dans cette position, la première face interne 12 et la deuxième face interne 16 de la coque externe 5 délimitent partiellement une enceinte 18 de réception du fourreau interne 6.

L'enceinte 18 est pourvue d'au moins une rampe de guidage 19 du fourreau interne 6 lors de l'introduction de ce dernier à l'intérieur de la coque externe 5. La rampe de guidage 19 est préférentiellement ménagée parallèlement au plan longitudinal P2 en étant portée par un renfort 20 ménagé selon le plan transversal P1. Le renfort 20 est préférentiellement pourvu d'au moins un doigt de guidage 21 du fourreau interne 6 qui est ménagé aux extrémités de la rampe de guidage 19 pour border au moins partiellement le fourreau interne 6 lors de l'insertion de ce dernier à l'intérieur de la coque externe.

La rampe de guidage 19 est prévue pour guider en translation la première face externe 13 du fourreau interne 6 jusqu'à ce que l'ergot 10 s'insère dans la rainure 11 et que la première butée 14 et la deuxième butée 15 soient en contact l'une avec l'autre, le fourreau interne 6 étant alors encastrée entre la première face interne 12 et la deuxième face interne 16 de la coque externe 5, tel qu'illustré sur la figure 4. Pour faciliter l'insertion du fourreau interne 6 à l'intérieur de la coque externe 5, la face externe 13 est pourvue d'au moins un rail de guidage 23 qui s'étend selon l'axe longitudinal A1 d'extension générale du balai d'essuyage 2.

Un procédé d'assemblage d'un tel balai d'essuyage 2 comprend une première étape d'insertion du fourreau interne 6 à l'intérieur de la coque externe 5 à partir d'un déplacement en translation 22 du fourreau interne 6 et de la coque externe 5 l'un par rapport à l'autre, tel qu'illustré sur la figure 2.

Puis, le procédé d'assemblage comprend une deuxième étape d'encastrement du fourreau interne 6 entre la première face interne 12 et la deuxième face interne 16 de la coque externe 5. La deuxième étape d'encastrement comprend également une étape de mise en place au moins partielle de l'ergot 10 de la coque externe 5 à l'intérieur de la rainure 11 du fourreau interne 6, tel qu'illustré sur la figure 4.

Enfin, le procédé d'assemblage comprend une troisième étape de verrouillage de l'embout d'extrémité 1 sur le support flexible 3.

## Revendications

1. Embout d'extrémité (1) pour un balai d'essuyage (2) d'une vitre d'un véhicule automobile comprenant au moins un support flexible (3) ainsi qu'une lame de frottement (4) destinée à être appliquée contre la vitre, l'embout d'extrémité (1) comprenant un logement (8) apte à recevoir une partie terminale du support flexible (3), l'embout d'extrémité (1) comprenant deux éléments distincts (5,6) dont une coque externe (5) et un fourreau interne (6) qui est pourvu du logement (8), en position d'utilisation du balai d'essuyage (2), la coque externe (5) logeant le fourreau interne (6), l'embout d'extrémité (1) étant pourvu d'au moins un premier moyen de verrouillage (10,11,14,15) du fourreau interne (6) à l'intérieur de la coque externe (5), l'embout d'extrémité (1) étant **caractérisé en ce que** le premier moyen de verrouillage (10,11,14,15) comprend au moins deux butées antagonistes (14,15) dont au moins une première butée (14) équipant une deuxième face interne (16) de la coque externe (5) et au moins une deuxième butée (15) équipant une deuxième face externe (17) du fourreau interne (6).

2. Embout d'extrémité (1) selon la revendication 1, **caractérisé en ce que** le premier moyen de verrouillage (10,11,14,15) est un moyen de verrouillage par emboîtement.

3. Embout d'extrémité (1) selon la revendication 2, **caractérisé en ce que** le premier moyen de verrouillage (10,11,14,15) comprend au moins un ergot (10) et au moins une rainure (11) apte à recevoir au moins partiellement l'ergot (10) en position d'utilisation du balai d'essuyage (2).

4. Embout d'extrémité (1) selon la revendication 3, **caractérisé en ce que** l'ergot (10) équipe une première face interne (12) de la coque externe (5) et la rainure (11) équipe une première face externe (13) du fourreau interne (6).

5. Embout d'extrémité (1) selon l'une quelconque des revendications précédentes, **caractérisé en ce que** la première butée (14) et la deuxième butée (15) s'étendent à l'intérieur d'un plan transversal (P1) qui est orthogonal à un axe d'extension longitudinal (A1) de l'embout d'extrémité (1).

6. Embout d'extrémité (1) selon l'une quelconque des revendications 4 et 5, **caractérisé en ce que** la première face interne (12) et la deuxième face interne (16) de la coque externe (5) délimitent partiellement une enceinte (18) de réception du fourreau interne (6).

7. Embout d'extrémité (1) selon la revendication 6, **caractérisé en ce que** l'enceinte (18) loge au moins une rampe de guidage (19) du fourreau interne (6).

8. Embout d'extrémité (1) selon la revendication 7, **caractérisé en ce que** la rampe de guidage (19) est portée par un renfort (20), la rampe de guidage étant ménagée selon un plan longitudinal (P2).

9. Balai d'essuyage (2) comprenant au moins un embout d'extrémité (1) selon l'une quelconque des revendications précédentes et ledit support flexible (3) inséré à l'intérieur du logement (8).

10. Balai d'essuyage (2) selon la revendication 9, **caractérisé en ce que** le balai d'essuyage comprend au moins un deuxième moyen de verrouillage de la partie terminale du support flexible (3) en position engagée à l'intérieur du logement (8).

11. Système d'essuyage comprenant un balai d'essuyage (2) selon l'une quelconque des revendications 9 et 10, et un bras d'entraînement dudit balai d'essuyage (2).

12. Procédé d'assemblage d'un balai d'essuyage (2) selon les revendications 9 ou 10, **caractérisé en ce que** le procédé d'assemblage comprend une première étape d'insertion du fourreau interne (6) à l'intérieur de la coque externe (5) à partir d'un déplacement en translation du fourreau interne (6) et de la coque externe (5) l'un par rapport à l'autre.

13. Procédé d'assemblage d'un balai d'essuyage (2) selon la revendication 12, **caractérisé en ce que** le procédé d'assemblage comprend une deuxième étape d'encastrement du fourreau interne (6) entre la première face interne (12) et la deuxième face interne (16) de la coque externe (5), la deuxième étape d'encastrement comprenant également une étape d'de mise en place au moins partielle de l'ergot (10) de la coque externe (5) à l'intérieur de la rainure (11) du fourreau interne (6).

14. Procédé d'assemblage d'un balai d'essuyage (2) selon la revendication 13, **caractérisé en ce que** le procédé d'assemblage comprend une troisième étape de verrouillage de l'embout d'extrémité (1) sur le support flexible (3).

## Patentansprüche

1. Endstück (1) für einen Scheibenwischer (2) einer Scheibe eines Kraftfahrzeugs, aufweisend mindestens eine flexible Halterung (3) sowie ein Reibblatt (4), welches dafür vorgesehen ist, gegen die Scheibe angelegt zu werden, wobei das Endstück (1) eine Aufnahme (8) aufweist, welche dafür geeignet ist, einen Endabschnitt der flexiblen Halterung (3) aufzunehmen, wobei das Endstück (1) zwei verschiedene Elemente (5, 6) aufweist, darunter eine äußere Schale (5) und ein inneres Futteral (6), das mit der Aufnahme (8) versehen ist, wobei die aüßere Schale (5) in der Verwendungsposition des Scheibenwischers das innere Futteral (6) aufnimmt, wobei das Endstück (1) mit mindestens einem ersten Mittel zum Verriegeln (10, 11, 14, 15) des inneren Futterals (6) im Inneren der äußeren Schale (5) versehen ist,
wobei das Endstück (1) **dadurch gekennzeichnet ist, dass** das erste Verriegelungsmittel (10, 11, 14, 15) mindestens zwei entgegenwirkende Anschläge (14, 15) aufweist, von denen mindestens ein erster Anschlag (14) eine zweite, innere Fläche (16) der äußeren Schale (5) bestückt und mindestens ein zweiter Anschlag (15) eine zweite, äußere Fläche (17) des inneren Futterals (6) bestückt.

2. Endstück (1) nach Anspruch 1, **dadurch gekennzeichnet, dass** das erste Verriegelungsmittel (10, 11, 14, 15) ein Verriegelungsmittel durch Schachtelung ist.

3. Endstück (1) nach Anspruch 2, **dadurch gekennzeichnet, dass** das erste Verriegelungsmittel (10, 11, 14, 15) mindestens einen Sporn (10) und mindestens einen Rille (11) aufweist, welche dafür geeignet ist, zumindest teilweise den Sporn (10) in Gebrauchsposition des Scheibenwischers (2) aufzunehmen.

4. Endstück (1) nach Anspruch 3, **dadurch gekennzeichnet, dass** der Sporn (10) eine erste, innere Fläche (12) der äußeren Schale (5) bestückt und die Rille (11) eine erste, äußere Fläche (13) des inneren Futterals (6) bestückt.

5. Endstück (1) nach einem der vorhergehenden Ansprüche, **dadurch gekennzeichnet, dass** sich der erste Anschlag (14) und der zweite Anschlag (15) innerhalb einer Querebene (P1) erstreckt, welche senkrecht auf einer longitudinalen Erstreckungsachse (A1) des Endstücks (1) steht.

6. Endstück (1) nach einem der Ansprüche 4 und 5, **dadurch gekennzeichnet, dass** die erste, innere Fläche (12) und die zweite, innere Fläche (16) der äußeren Hülle (5) teilweise einen abgeschlossenen Raum (18) zur Aufnahme des inneren Futterals (6) abgrenzen.

7. Endstück (1) nach Anspruch 6, **dadurch gekennzeichnet, dass** der abgeschlossene Raum (18) für mindestens eine Führungsrampe (19) des inneren Futterals (6) Platz bietet.

8. Endstück (1) nach Anspruch 7, **dadurch gekennzeichnet, dass** die Führungsrampe (19) von einer Aussteifung (20) getragen wird, wobei die Führungsrampe gemäß einer longitudinalen Ebene (P2) eingerichtet ist.

9. Scheibenwischer (2), aufweisend mindestens ein Endstück (1) nach einem der vorhergehenden Ansprüche und wobei die flexible Halterung (3) in das Innere der Aufnahme (8) eingesetzt ist.

10. Scheibenwischer (2) nach Anspruch 9, **dadurch gekennzeichnet, dass** der Scheibenwischer mindestens ein zweites Verriegelungsmittel des Endabschnitts der flexiblen Halterung (3) in in das Innere der Aufnahme (8) eingegriffener Position aufweist.

11. Scheibenwischersystem, aufweisend einen Scheibenwischer (2) nach einem der Ansprüche 9 und 10 und einen Antriebsarm des Scheibenwischers (2).

12. Verfahren zum Zusammenbau eines Scheibenwischers (2) nach den Ansprüchen 9 oder 10, **dadurch gekennzeichnet, dass** das Verfahren zum Zusammenbau einen ersten Schritt des Einsetzens des inneren Futterals (6) in das Innere der äußeren Hülle (5) aus einer translatorischen Verschiebung des inneren Futterals (6) und der äußeren Schale (5) zueinander aufweist.

13. Verfahren zum Zusammenbau eines Scheibenwischers (2) nach Anspruch 12, **dadurch gekennzeichnet, dass** das Verfahren zum Zusammenbau einen zweiten Schritt des Einfügens des inneren Futterals (6) zwischen die erste, innere Fläche (12) und die zweite, innere Fläche (16) der äußeren Schale (5) aufweist, wobei der zweite Schritt des Einfügens ebenfalls einen Schritt der teilweisen Anordnung des Sporns (10) der äußeren Schale (5) im Inneren der Rille (11) des inneren Futterals (6) aufweist.

14. Verfahren zum Zusammenbau eines Scheibenwischers (2) nach Anspruch 13, **dadurch gekennzeichnet, dass** das Verfahren zum Zusammenbau einen dritten Schritt des Verriegelns des Endstücks (1) an der flexiblen Halterung (3) aufweist.

## Claims

1. End fitting (1) for a wiper blade (2) of a pane of glass of a motor vehicle comprising at least one flexible support (3) and also a squeegee blade (4) designed to be applied against the pane of glass, the end fitting (1) comprising a housing (8) capable of receiving a terminal part of the flexible support (3), the end fitting (1) comprising two distinct elements (5, 6) including an external shell (5) and an internal liner (6) that is provided with the housing (8), the external shell (5) accommodating the internal liner (6) in a position of use of the wiper blade (2), the end fitting (1) being provided with at least one first locking means (10, 11, 14, 15) of the internal liner (6) inside the external shell (5), the end fitting (1) being **characterised in that** the first locking means (10, 11, 14, 15) comprises at least two antagonistic stops (14, 15) of which at least one first stop (14) equipping a second internal face (16) of the external shell (5) and at least one second stop (15) equipping a second internal face (17) of the internal liner (6).

2. End fitting (1) according to claim 1, **characterised in that** the first locking means (10, 11, 14, 15) is a nesting locking means.

3. End fitting (1) according to claim 2, **characterised in that** the first locking means (10, 11, 14, 15) comprises at least one stud (10) and at least one groove (11) capable of receiving at least in part the stud (10) in the position of use of the wiper blade (2).

4. End fitting (1) according to claim 3, **characterised in that** the stud (10) equips a first internal face (12) of the external shell (5) and the groove (11) equips a first external face (13) of the internal liner (6).

5. End fitting (1) according to any one of the preceding claims, **characterised in that** the first stop (14) and the second stop (15) extend inside a transverse plane (P1) that is orthogonal to a longitudinal axis of elongation (A1) of the end fitting (1).

6. End fitting (1) according to claim 4 or 5, **characterised in that** the first internal face (12) and the second internal face (16) of the external shell (5) delimit in part an enclosure (18) for receiving the internal liner (6).

7. End fitting (1) according to claim 6, **characterised in that** the enclosure (18) accommodates at least one guide ramp (19) of the internal liner (6).

8. End fitting (1) according to claim 7, **characterised in that** the guide ramp (19) is carried by a reinforcement (20), the guide ramp being provided in a longitudinal plane (P2).

9. Wiper blade (2) comprising at least one end fitting (1) according to any one of the preceding claims and said flexible support (3) inserted inside the housing (8).

10. Wiper blade (2) according to claim 9, **characterised in that** the wiper blade comprises at least one second locking means of the terminal part of the flexible support (3) in the engaged position inside the housing (8).

11. Wiper system comprising a wiper blade (2) according to claim 9 or 10, and a driving arm of said wiper blade (2).

12. Assembly method of a wiper blade (2) according to claim 9 or 10, **characterised in that** the assembly method comprises a first step of insertion of the internal liner (6) inside the external shell (5) based on a translational displacement of the internal liner (6) and the external shell (5) relative to one another.

13. Assembly method of a wiper blade (2) according to claim 12, **characterised in that** the assembly method comprises a second step of engaging the internal liner (6) between the first internal face (12) and the second internal face (16) of the external shell (5), the second step of engagement also comprising a step of at least partial positioning of the stud (10) of the external shell (5) inside the groove (11) of the internal liner (6).

14. Assembly method of a wiper blade (2) according to claim 13, **characterised in that** the assembly method comprises a third locking step of the end fitting (1) on the flexible support (3).
